# EUROPEAN PATENT SPECIFICATION

(11) **EP 0 670 433 B1**
(45) Date of publication and mention of the grant of the patent: **08.12.1999**
(21) Application number: 95101250.9
(22) Date of filing: 28.06.1990
(51) Int. Cl.: F16D 3/33, F16D 3/43, F16D 3/42, F16D 3/32

(54) **Universal joint having exterior lubricating ring**
Kreuzgelenk mit äusserer Schmierung
Joint universel avec anneau extérieur de lubrification

(30) Priority: 28.06.1989 US 373183
(43) Date of publication of application: 06.09.1995
(62) Divisional of application: 90911107.2
(73) Proprietor: CORNAY, Paul Joseph, Longmont, CO 80501 (US)
(72) Inventor: CORNAY, Paul Joseph, Longmont, CO 80501 (US)
(74) Representative: Godsill, John Kenneth

(56) References cited:
- DE-C- 664 786
- GB-A- 2 014 276
- US-A- 1 595 075
- US-A- 1 853 171
- US-A- 1 913 783

## Description

The present invention relates to universal joints.

Universal joints are used in a multitude of industries, including the aerospace, automotive and marine industries. The aerospace industry uses universal joints, for example, to transfer power to control surfaces. Universal joints are used in steering columns in automobiles to transfer power. Universal joints are used in boat motors. In addition, universal joints can be found in everything from tractors to robots.

Conventional Cardan-type universal joints use two yokes and an internal spider. An alternative is an external ring type of joint, forms of which are disclosed in FR-1044902 and US-1381599 and which have two yokes attached to respective shafts, with the yokes pivotally attached, on first and second axes respectively, to a ring surrounding the ears of the yokes. The external ring of US 1381599 can facilitate the provision of lubrication. Lubrication is also a subject addressed in GB 2014276 which, however, discloses the use of frames in place of yokes and also discloses a series of lubrication passages passing through various different components, including the frames, and conveying lubricant serially to bearings carried thereby.

According to the present invention there is provided a universal joint comprising a ring containing a lubricant passage having lubricant ports, a first and a second shaft, a yoke connected to the second shaft and disposed within the ring, first pin means pivotally interconnecting the yoke and the ring, further pin means pivotally interconnecting the first shaft and the ring, and a plurality of bearing means in the ring in fluid contact with the lubricant passage and receiving the first and further pin means, characterised in that the lubricant passage is a single channel which is in the ring and extends less than 360 degrees around the ring between two end regions of the passage, the end regions having respective lubricant ports which open into the passage at respective, spaced, portions so that lubricant entering one lubricant port must travel through substantially the entire length of the lubricant passage before exiting through the second lubricant port.

The present invention can provide a universal joint especially designed for high operating angle and high r.p.m. applications.

A first embodiment of the joint comprises a ball, a hemispherical split-cup shaped yoke and a ring, the ball being inside the yoke, which is inside the ring; pins connect the ring to the yoke and to the ball. A first shaft is connected to the ball and a second shaft is connected to the yoke. The yoke is cup-shaped internally to have the closest fit to the ball. The yoke is cup-shaped externally to have the closest fit to the ring. The cup shape of the yoke enables it to withstand centrifugal and torsional loads better than conventional Y-shaped yokes.

The ring, the shaft, the ball and the yoke are each formed from components which are circularly symmetrical about their own longitudinal axes. This shape of the components allows the joint to be manufactured in computerized lathes and allows the joint to run at higher angles and at higher r.p.m. with less vibration than other universal joints.

A second, preferred, embodiment of the present invention is a universal joint comprising a cross trunnion, a hemispherical split-cup shaped yoke and a ring, the cross trunnion being inside the yoke, which is inside the ring; pins connect the ring to the yoke and to the cross trunnion. A first shaft is connected to the cross trunnion and a second shaft is connected to the yoke.

The yoke is shaped internally to have a close fit to the cross trunnion while allowing the cross trunnion to freely move therein at the desired operating angle of the joint without contact of the two parts. The yoke is cup-shaped externally to have the closest fit to the ring while allowing the ring to oscillate therearound without contact of the two parts. The cup shape of the yoke enables it to withstand centrifugal and torsional loads better than conventional Y-shaped yokes. The ring and the yoke are each formed from components which are circularly symmetrical about their own longitudinal axes. This shape of the components allows the joint to be manufactured in computerized lathes which facilitates balancing and allows the joint to run at higher angles and at higher r.p.m. with less vibration than other universal joints.

Having the ball or cross trunnion inside the yoke with the yoke inside the ring causes the bulk of the mass of the universal joint to be closer to the spin axis of the universal joint than would be possible if the ring were between the cross trunnion and the yoke. This reduces the effects of centrifugal force, allowing for greater dynamic joint stability. The yoke may be bevelled internally to minimize its size and maximize its strength, while maximizing the operating angle of the joint.

Having the ball or cross trunnion inside the yoke enables the joint to be misaligned at angles up to and beyond 45° in less lateral distance (that is, distance along the longitudinal axis of the joint) than in conventional Cardan-type joints.

All pivotal motion of the joint takes place in the ring, where the pins connecting the ring to the ball or cross trunnion and to the yoke are surrounded by needle bearings.

In the second embodiment, lubrication of the pins and bearings is also achieved by means of the non-continuous lubricant-filled channel in the ring. Lubricant ports are provided to allow the channel to be filled with lubricant. Bearing assemblies having two lubricant ports located in the outer race and 180° apart are in communication with the annular lubricant channel in the ring allowing the lubricant to be pumped through the ring and through all four bearing assemblies. The two adjacent lubricant ports in the ring are only connected by the non-continuous annular channel with there being no communication in the shortest distance between the two ports in the ring. This is advantageous over other ring designs by omitting the chance of a blockage in the lubricant channel causing the lubricant to follow the path of least resistance thereby not lubricating all four bearing assemblies. In addition, the non-continuous lubricant channel with an entry and exit port allows the system to be purged, replacing old lubricant with new.

The joints are designed to accommodate an operating angle of up to 45° between the drive shaft and the driven shaft.

There may be some advantages associated with the use of input, output and centre shafts having their mass concentrated near the axes of rotation and rings having a larger moment of inertia resisting changes in operating speed than the moment of inertia resisting oscillation. This may reduce the transmission of vibrations caused by the non-uniform motion of this member in a double-joint configuration. Comparative testing against a typical double-Cardan design showed that a joint according to one embodiment of the present invention can have up to 75% less vibration when run at high angles and speeds. In addition, the hemispherical cups as well as the rings may facilitate balancing the unit and this may contribute to vibration control as well.

For a better understanding of the invention and to show how the same may be carried into effect, reference will now be made, by way of example, to the accompanying drawings, wherein:

Fig. 1 is an exploded view of a universal joint in accordance with EP-0493388.

Fig. 2 is a side view of the embodiment of the joint shown in Fig. 1.

Fig. 3 is a sectional view of an alternative embodiment of EP-0493388.

Fig. 4 is a sectional view of the pivot ring of the first and second embodiments of EP-0493388.

Fig. 5 is a sectional view taken along the lines 5-5 in Fig. 6.

Fig. 6 is a partially cut-away view of a third embodiment of EP-0493388.

Fig. 7 is an exploded view of the preferred embodiment of the universal joint of the present invention.

Fig. 8 is a side view of the preferred embodiment of the present invention.

Fig. 9 is a sectional view of the preferred embodiment of the present invention.

Fig. 10 is a sectional view of the pivot ring of the preferred embodiment of the present invention.

Fig. 11 is a sectional view taken along the lines 11-11 in Fig. 12.

Fig. 12 is a partially cut-away view of a fifth embodiment of the universal joint of the present invention.

### Parts List:

The following is a list of suitable parts and materials for the various elements of the present invention.
10 Universal joint
11 hemispherical split-cup yoke (AISI 4340 metal alloy) 12 ball (AISI 4340)
13 shaft (AISI 4340)
14 shaft (AISI 4340)
15 ring (AISI 4340)
16 notches in yoke 11
17 inner ring member (AISI 4340)
18 outer ring member (AISI 4340)
19 channel in ring 15
20 lubricant ports in ring 15
21 long pin (AISI 1060 with a hardness of 60-65 Rockwell C)
22 short pin (AISI 1060 with a hardness of 60-65 Rockwell C)
23 bevel in yoke 11
31 needle bearings
32 races
33 holes in ring 15
34 holes in races 32
35 band of material, preferably metal with an inner surface induction hardened to a depth of 0.075 cm to a hardness of Rockwell C 60
41 hole in ball 12
42 hole in yoke 11
100 universal joint
113 shaft (AISI 4340)
134 channel in races 32
200 universal joint
213 shaft (AISI 4340)
300 universal joint
310 universal joint
311 hemispherical split-cup yoke (AISI 4340)
312 cross trunnion (AISI 4340)
313 shaft (AISI 4340)
314 shaft (AISI 4340)
315 ring (AISI 4340)
316 notches in yoke 311
317 inner ring member (AISI 4340)
318 outer ring member (AISI 4340)
319 channel in ring 315
320 lubricant port in ring 315
321 long pin (AISI 1060 with a hardness of 60-65 Rockwell C)
322 short pin (AISI 1060 with a hardness of 60-65 Rockwell C)
323 beveled inner radial surface of yoke 311
324 beveled inner surface of yoke 311
325 beveled flat surface of yoke 311
326 Lubricant port in ring 315
327 flush-fitting NPT allen-head plug
328 flush-fitting NPT allen-head plug
330 closed-end needle bearing assembly (modified Torrington bearing number M-1081-20H)
332 races
333 holes in ring 315
334 holes in races 332
336 internal snap rings
337 snap-ring grooves in holes 333
338 polytetrafluoroethylene (PTFE) spacer rings
339 rubber O-ring (Bruna-N 90 Durometer, such as Parker No. 2-016)
340 shaft (AISI 4340)
341 hole in cross-trunnion 312
342 hole in yoke 311
513 shaft (AISI 4340)

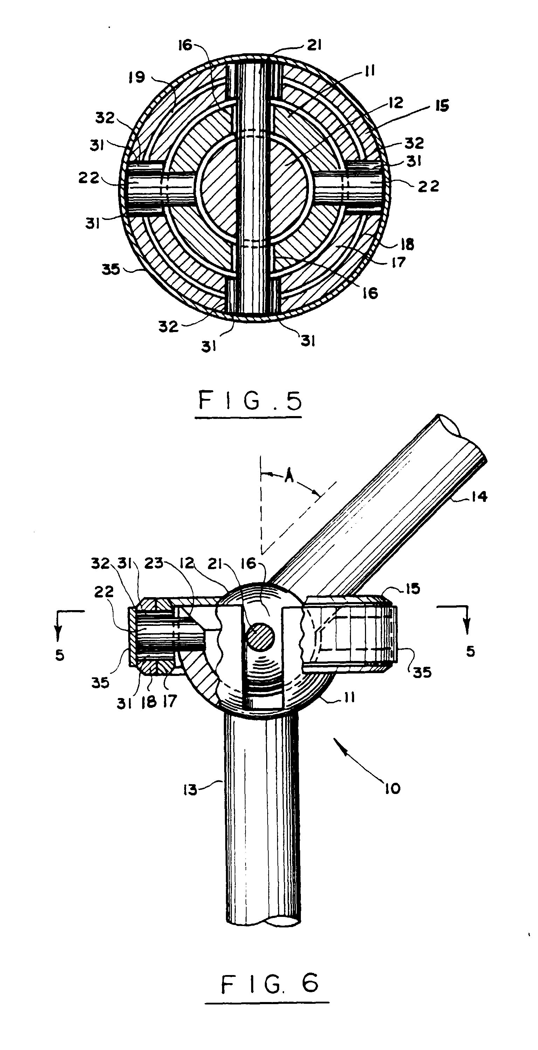

Referring now to the drawings, universal joint 10 (Figs. 5 and 6), comprises a hemispherical split-cup yoke 11, a ball 12, a shaft 13, a shaft 14, and a ring 15.

Yoke 11 has a substantially hemispherical outer surface and a concentric, substantially hemispherical inner surface.

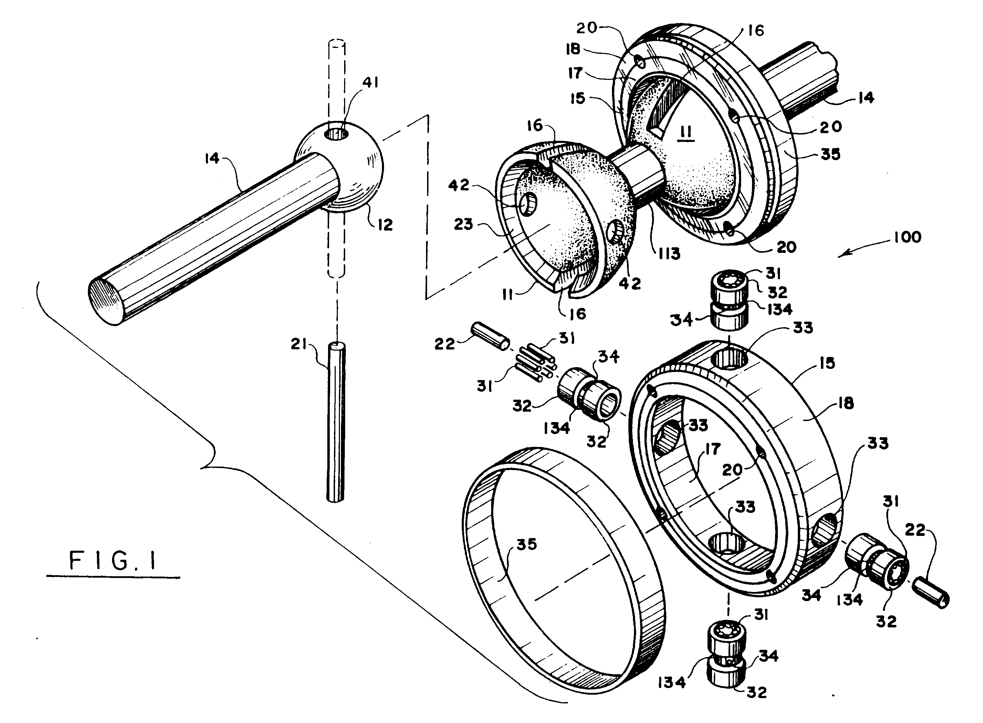

A relatively long pin 21 extends through a hole 41 (see Fig. 1) in ball 12 into ring 15. Relatively short pins 22 connect yoke 11 with ring 15. The first and second ends of pin 21 are pivotally received in ring 15 and are surrounded by needle bearings 31. A first end of each pin 21 is received in holes 42 in yoke 11 and a second end of each pin 22 is pivotally received in ring 15. The second end of each pin 22 is surrounded by needle bearings 31. A band 35 of material, preferably metal, encircles ring 15, and prevents needle bearings 31 and pins 21 and 22 from protruding out of ring 15. Band 35 also acts as a seal to hold in lubricant. Needle bearings 31 are contained in races 32 which press-fit into holes 33 (see Fig. 1) in ring 15. The press fit of races 32 in holes 33 prevents needle bearings 31 from moving inward toward the center of universal joint 10. Races 32 have a channel 134 therein to allow lubricant to pass therearound and two holes 34 therein to allow lubricant to pass therethrough. Holes 34 in races 32 align with a channel 19 in ring 15. The bearing assembly comprising races 32 and needle bearings 31 can advantageously be made by modifying Torrington bearing assembly number BH-108-20H.

When a sealed closed-end needle bearing assembly similar to Torrington Bearing Part No. M-11101-OH is used in place of the open-end bearing assembly comprising race 32 and needle bearings 31, band 35 may be omitted.

Yoke 11 has notches 16 to allow pin 21 to move therein.

Shaft 14 is fixedly attached to ball 12; shaft 14 and ball 12 may be integral. Shaft 13 and yoke 11 are fixedly attached to one another; they may be integral.

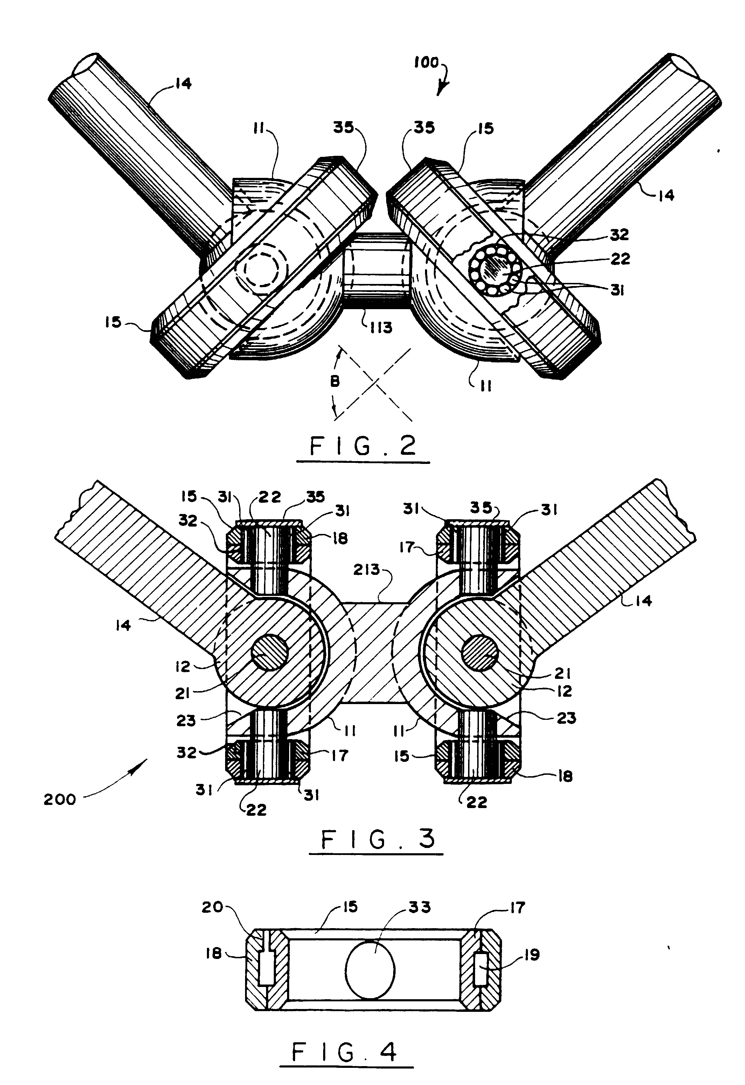

Ring 15 comprises an inner ring member 17 and an outer ring member 18 (see Fig. 4). A portion of channel 19 is in each ring member in the form of an annular recess. Ring members 17 and 18 are sized such that inner ring member 17 may be press-fit into outer ring member 18 to form channel 19 as a lubricant-tight channel. Races 32 help to hold ring 15 together by preventing movement of inner ring member 17 with respect to outer ring member 18.

Ring 15 has a number of lubricant ports 20 communicating with channel 19. Lubricant ports 20 may be sealed with, for example, removable screw plugs (not shown). Lubricant ports 20 allow one to add lubricant to channel 19, change the lubricant in channel 19, or purge lubricant from channel 19.

The edge of yoke 11 has a bevel 23 to permit shaft 14 to misalign up to a full angle A (preferably 45° - see Figure 6) with respect to the longitudinal axis of shaft 14. When operational conditions do not require angle A to be so large, bevel 23 may be omitted.

Prior to the forming of holes 33, 41, and 42 and notches 16, ring 15, ball 12, yoke 11, and shafts 13 and 14 are each circularly symmetrical about their longitudinal axes.

Universal joint 100 (Figs. 1 and 2) is similar to universal joint 10. Universal joint 100 has two hemispherical split-cup yokes 11 joined by a shaft 113 which is fixedly attached to the yokes. The two yokes 11 and the shaft 113 may be integral. Shafts 14 of universal joint 100 may be flexed up to an angle B relative to one another. Angle B is preferably 90°. The diameter of shaft 113 limits the size of angle B when the universal joint is in the position shown in Fig. 2. If the desired application does not require that the shafts 14 be offset by an angle as great as angle B in Fig. 2, the diameter of the shaft connecting yokes 11 can be greater than that of shaft 113. Fig. 3 shows a universal joint 200 having such a shaft 213. Shaft 213 is advantageous over shaft 113 because its increased diameter gives it increased strength and greater dynamic stability.

Universal joint 10 is assembled and made ready for use by: press-fitting inner ring member 17 into outer ring member 18; press-fitting races 32 having needle bearings 31 therein into holes 33 in ring 15; placing ring 15 such that two holes 33 align with holes 42 in yoke 11 and inserting pins 22 through races 32 and press-fitting pin 22 into holes 42; inserting ball 12 into yoke 11 and aligning it such that hole 41 aligns with two holes 33 in ring 15, and inserting pin 21 through holes 33 in ring 15 and press-fitting it into hole 41 in ball 12 so that an equal amount of pin 21 protrudes from each side of ball 12; press-fitting band 35 over ring 15; and pumping lubricant into channel 19 through one of lubricant ports 20 and out of another lubricant port 20. The lubricant passes through channels 134 and holes 34 in races 32 to lubricate needle bearings 31. As can be seen in Figure 5, all needle bearings 31 share the lubricant in channel 19.

Although lubricant ports 20 are shown in the ring 15 in the upper part of Figure 1 as being on the surface facing the second ring 15, it is preferable for the ports 20 to be on the opposite surface of ring 15 (as shown in the lower ring 15 in Figure 1) so that access to ports 20 is easier when joint 100 is installed.

Either shaft 13 or 14 can be connected to a drive shaft; the other is connected to the driven shaft. These connections can be made by any conventional means.

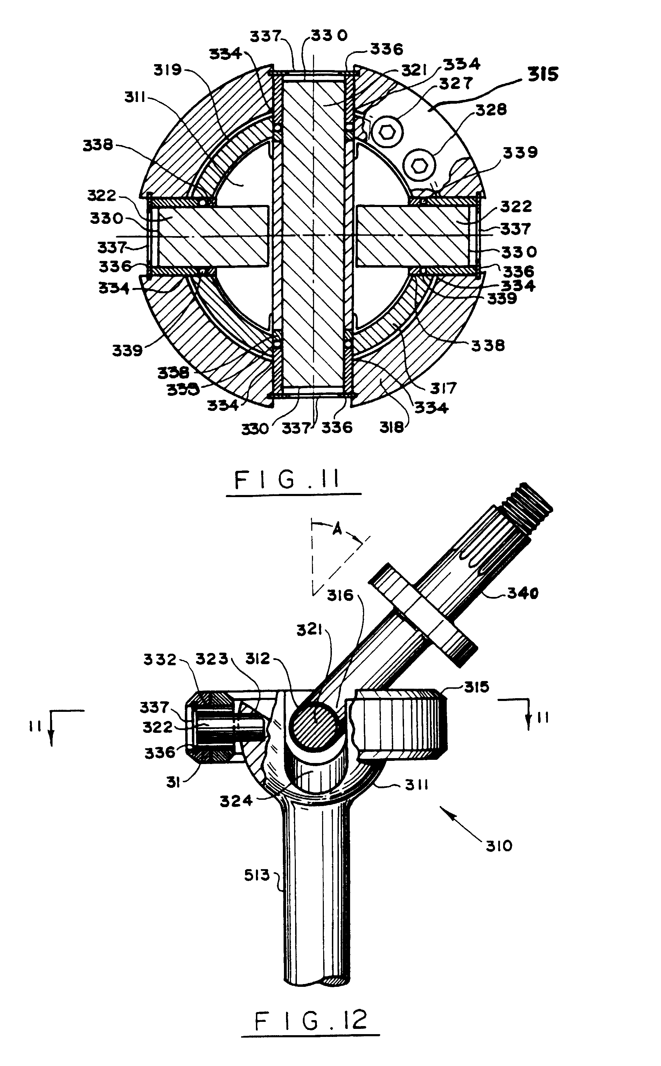

Another embodiment of the present invention, universal joint 310 (Figs. 11 and 12), comprises a hemispherical split-cup yoke 311, a cross trunnion 312, a shaft 513, a shaft 340, and a ring 315.

Yoke 311 has a substantially hemispherical outer surface and a concentric, substantially hemispherical inner surface.

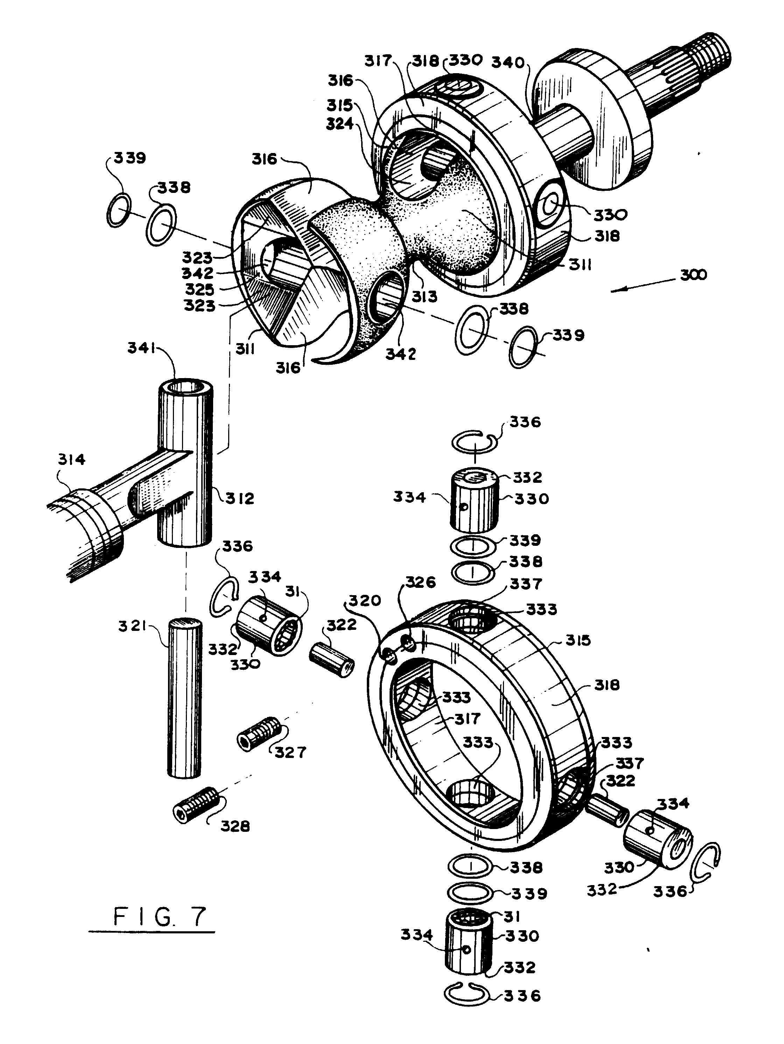

A relatively long pin 321 extends through a hole 341 (see Fig. 7) in cross trunnion 312 into ring 315. Relatively short pins 322 connect yoke 311 with ring 315. The first and second ends of pin 321 are pivotally received in closed-end needle bearing assemblies 330 in ring 315. A first end of each pin 322 is received by a shrink fit or press fit in holes 342 in yoke 311 and a second end of each pin 322 is pivotally received in ring 315. The second end of each pin 322 is received in closed-end needle bearing assemblies 330. Closed-end needle bearing assemblies 330 include needle bearings 31 which are contained in races 332 which press-fit into holes 333 (see Fig. 7) in ring 315. Races 332 have two holes 334 therein, 180° apart, to allow lubricant to pass therethrough. Holes 334 in races 332 align with a channel 319 in ring 315. Closed-end needle bearing assemblies 330 are secured by internal snap-rings 336 which fit into snap-ring grooves 337 in holes 333.

Yoke 311 has notches 316 to allow pin 321 to move therein.

Shaft 340 is fixedly attached to trunnion 312; shaft 340 and trunnion 312 may be integral. Shaft 513 and yoke 311 are fixedly attached to one another; they may be integral.

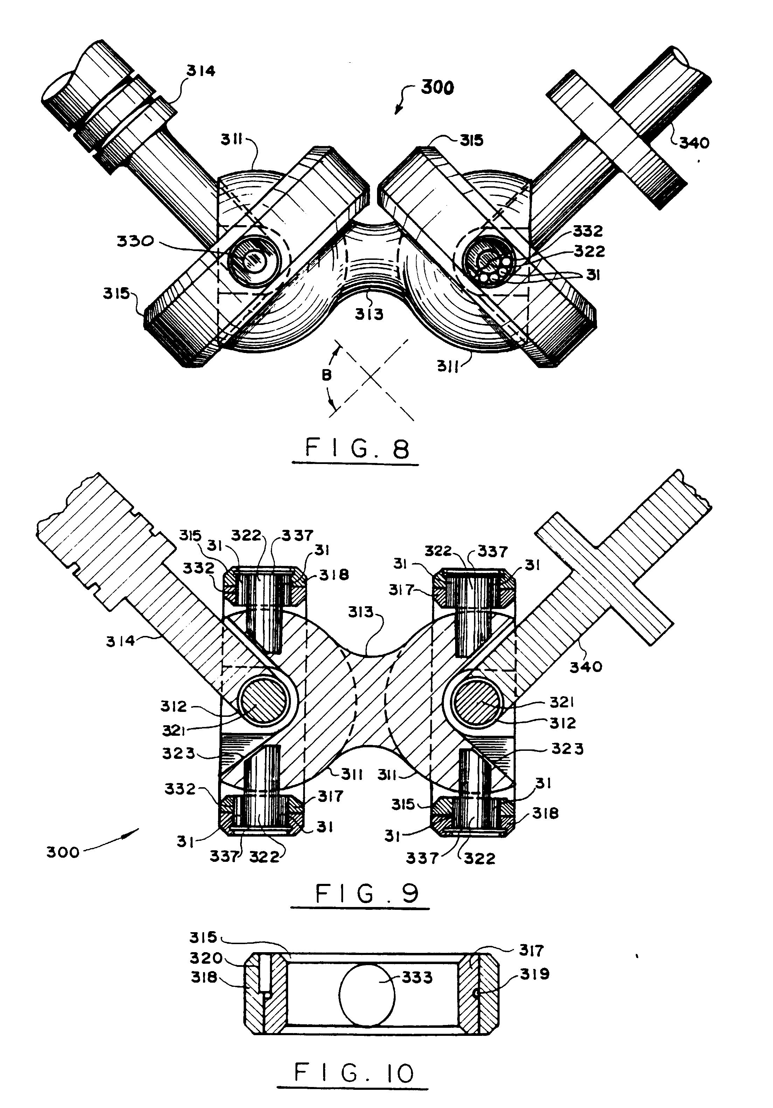

Ring 315 comprises an inner ring member 317 and an outer ring member 318 (see Fig. 11). Channel 319 is in ring member 317 and is in the form of a non-continuous annular recess whose cross section is semi-circular in shape (see Figure 10). Channel 319 is preferably formed by machining a groove in the outer diameter of ring member 317 before assembling ring 315. Ring members 317 and 318 are sized such that inner ring member 317 may be press-fit into outer ring member 318 to form channel 319 as a lubricant-tight channel. Races 332 help to hold ring 315 together by preventing movement of inner ring member 317 with respect to outer ring member 318.

Ring 315 has two lubricant ports, 320, 326, communicating with non-continuous annular channel 319. Lubricant ports 320, 326, are located on top of ring 315 and are centered over channel 319. Ports 320 and 326 are adjacent one another and each port communicates with one end of channel 319. Channel 319 does not extend completely around ring 315; rather, channel 319 extend around in ring 315 almost 360° from port 320 to port 326. Lubricant ports 320 and 326 may be sealed with, for example, removable flush fitting NPT allen-head plugs 327, 328. Bearing assemblies 330 are lubricated by removing allen-head plugs 327, 328, and threading a lubricant gun (not shown) into either lubricant port 320, 326 and lubricating by conventional means. Lubricant ports 320, 326, allow one to add lubricant to channel 319, change the lubricant in channel 319, or purge lubricant from channel 319 by forcing the lubricant through all four bearing assemblies 330 (via holes 334 in races 332) before exiting ring 315. Lubricant can be pumped into channel 319 from either port 320 or 326, allowing purging of the system from either direction. Because channel 319 does not extend completely around in ring 315, lubricant pumped into port 320 can travel in only one direction before lubricant exits out of port 326, thus forcing lubricant to contact all bearing assemblies 330 before exiting channel 319. Having two holes 334 spaced 180° apart in each race 332 forces lubricant to travel through all bearing assemblies 330 (via holes 334) before exiting channel 319. This ensures that lubrication will reach all needle bearings 31. Further, one can see in Figure 11 that holes 334 are positioned adjacent the inner end of bearing assemblies 330. This positioning helps to ensure that centrifugal force will aid in causing the lubricant to fill assemblies 330.

The interior of yoke 311 has a conical bevel 324 and a flat bevel 325 to permit shaft 340 to misalign up to a full angle A (preferably 45°) with respect to the longitudinal axis of shaft 513 while maintaining maximum strength of yoke 311.

Prior to the forming of holes 333, 341, and 342 and notches 316, ring 315, and yoke 311 are each circularly symmetrical about their longitudinal axes.

Yoke 311 preferably has a flat outer surface adjacent holes 342 (see Figure 7) for accommodating a spacer ring 338. Spacer rings 338 compress O-ring 339 to ensure that 0-ring 339 is compressed on three sides: the inner diameter by pins 321, 322; the front by races 332; and the back by spacer rings 338. O-rings 339 seal bearing assemblies 330 to prevent lubricant from escaping from between pins 321, 322 and races 332. Rings 338 and 339 and the flat exterior surface adjacent holes 342 may be omitted if closed-end bearings with built-in seals are used.

Universal joint 300 (Figs. 7-9) is similar to universal joint 310. Universal joint 300 has two hemispherical split-cup yokes 311 joined by a shaft 313 which is fixedly attached to the yokes. Shaft 313 blends into yokes 311 with a smooth radius forming an hourglass-shaped component. The two yokes 311 and the shaft 313 may be (and preferably are) integral. Shafts 314 and 340 of universal joint 300 may be flexed up to an angle B relative to one another. Angle B is preferably 90°. Universal joint 300 can operate at 90° in less lateral distance than can other universal joint designs known to the inventor. The size of angle B is limited by the contact of shafts 314 and 340 with yoke 311 when universal joint 300 is in the position shown in Fig. 8. If the desired application does not require that the shafts 314 and 340 be offset by an angle as great as angle B in Fig. 8, the diameter of the shaft connecting yokes 311 can be greater than that of shaft 313. Increasing the diameter of a shaft such as shaft 313 gives it increased strength and greater dynamic stability.

Universal joint 310 is assembled and made ready for use by: inserting yoke 311 into ring 315, with lubricant ports 320 and 326 facing outward, such that two holes 333 align with holes 342 in yoke 311; inserting pins 322 into holes 333 and pressing pins 322 into holes 342 of yoke 311; inserting PTFE spacer rings 338 over pins 322 in holes 333; inserting O-rings 339 over pins 322 in holes 333 and then pressing closed-end bearing assemblies 330 into holes 333 and over pins 322 until the ends of bearing assemblies 330 are flush with snap-ring grooves 337; securing bearing assemblies 330 in holes 333 by inserting snap rings 336 into snap-ring grooves 337; inserting cross trunnion 312 into yoke 311 and aligning it such that hole 341 aligns with holes 333 in ring 315; inserting long pin 321 into holes 333 and pressing long pin 321 into hole 341 until equal amounts of pin 321 extend out both ends of hole 341 in cross trunnion 312; inserting PTFE spacer rings 338 over both ends of pin 321 in holes 333; inserting O-rings 330 over both ends of pin 321 in holes 333 and pressing closed-end bearing assemblies 330 into holes 333 and over both ends of pin 321 until the ends of bearing assemblies 330 are flush with snap-ring grooves 337; securing bearing assemblies 330 in holes 333 by inserting snap rings 336 into snap-ring grooves 337; and pumping lubricant into channel 319 through one of lubricant ports 320, 326, and out of the other lubricant port. The lubricant passes through holes 334 in races 332 to lubricate needle bearings 31. As can be seen in Figure 11, all needle bearings 31 share the lubricant in channel 319.

Either shaft 513 or 340 can be connected to a drive shaft; the other is connected to the driven shaft. These connections can be made by any conventional means.

Closed-end bearing assemblies 330 and the bearing assemblies comprising races 32 can be interchanged, although assemblies 330 are preferred. Ring 35 is used to carry thrust load and to provide a seal when bearing assemblies comprising races 32 are used.

Pins 21, 22, 321, and 322 preferably have the same surface hardness as needle bearings 31; this is preferably a surface hardness of 60-65 Rockwell C.

Holes 33, 333, 41, 341, 42, and 342 are preferably made by line-boring. Line boring these holes enables very accurate pin alignment to be achieved; accurate pin alignment helps to increase the life of the joint by extending the life of the bearings.

The smooth outer surface of yoke 311 is helpful in that stresses can be evenly distributed thereover, rather than being concentrated at sharp edges.

Whenever "press-fit" has been used herein, "shrink-fit" could also have been used. Press fitting involves forcing together, for example, a pin into a hole of slightly smaller diameter than the pin, simply by mechanical force. Shrink fitting involves heating the part containing the hole and cooling the pin so that the diameter of the hole can be even smaller compared to the diameter of the pin than is possible with press fitting, resulting in a tighter fit of parts.

## Claims

1. A universal joint comprising a ring (315) containing a lubricant passage (319) having lubricant ports (320, 326), a first and a second shaft (313 or 513), a yoke (311) connected to the second shaft and disposed within the ring, first pin means (322) pivotally interconnecting the yoke and the ring, further pin means (321) pivotally interconnecting the first shaft and the ring, and a plurality of bearing means (321, 332) in the ring in fluid contact with the lubricant passage and receiving the first and further pin means, characterised in that the lubricant passage is a single channel which is in the ring and extends less than 360 degrees around the ring between two end regions of the passage, the end regions having respective lubricant ports (320, 326) which open into passage at respective, spaced, portions so that lubricant entering one lubricant port must travel through substantially the entire length of the lubricant passage before exiting through the second lubricant port.

2. A universal joint according to claim 1 and comprising:
a second ring (315, Fig. 7);
a second yoke (311) connected to the second shaft and disposed within the second ring;
a third bearing means (322, 332) pivotally interconnecting the second yoke and the second ring;
a third shaft; and
fourth bearing means (321, 332) pivotally interconnecting the third shaft and the second ring, there being a second non-continuous lubricant passage (319) in fluid contact with the third and fourth bearing means and having two end regions communicating with respective lubricant ports (320, 326) so that lubricant entering one of those lubricant ports must travel through substantially the entire length of the second lubricant passage before exiting through the other lubricant port, both the third and fourth bearing means being the second ring and the second lubricant passage being provided by a single channel which is in the second ring and extends less than 360° therearound.

3. A universal joint according to claim 2, and comprising third pin means (322) pivotally interconnecting the second yoke and second ring and fourth pin means pivotally interconnecting the second shaft and the second ring, the third and fourth bearing means respectively receiving the third and fourth pin means.

4. A universal joint according to any one of the preceding claims, wherein the bearing means include holes (334) through which lubricant must flow when travelling from the first port to the second port.

5. A universal joint according to any one of the preceding claims, wherein the or each ring comprises an inner ring member (317) and an outer ring member (318).

6. A universal joint according to claim 5, wherein the inner ring member is sized to fit into the outer ring member.

7. A universal joint according to claim 5 or 6, wherein the bearing means include races which contain bearings and which extend through the inner ring member and the outer ring member and help to hold the ring together by preventing movement of the inner ring member with respect to the outer ring member.

8. A universal joint according to any one of the preceding claims and comprising means for allowing the second shaft to move upto 45° relative to the first shaft.

9. A universal joint according to claim 8, when appended to claim 2, wherein the second shaft can move upto 90° relative to the third shaft.

10. A universal joint according to any one of the preceding claims, wherein the or each yoke and the or each ring are made of components which have longitudinal axes and which are each circularly symmetrical about their longitudinal axes.

11. A universal joint according to claim 1 or 3 or to any one of claims 2 and 4 to 10 when appended to claim 1 or 3, wherein the or each yoke (311) has disposed therein notches (316) to allow the pin means (321) coupled to the shaft or shafts to move relative to the yoke.

## Patentansprüche

1. Universalgelenk, umfassend: einen Ring (315), der einen Schmiermitteldurchgang (319) enthält, der Schmiermittelöffnungen (320, 326) aufweist; eine erste und eine zweite Welle (313 oder 513); ein Joch (311), das mit der zweiten Welle verbunden und innerhalb des Rings angeordnet ist; eine erste Stiftvorrichtung (322), die das Joch und den Ring schwenkbar verbindet, eine weitere Stiftvorrichtung (321), die die erste Welle und den Ring schwenkbar verbindet; und eine Anzahl Lagervorrichtungen (321, 332) im Ring, die in Fluidkontakt mit dem Schmiermitteldurchgang stehen und die erste und die weitere Stiftvorrichtung aufnehmen, dadurch gekennzeichnet, daß der Schmiermitteldurchgang ein einzelner Kanal ist, der sich im Ring befindet und sich zwischen zwei Endbereichen des Durchgangs über weniger als 360 Grad um den Ring herum erstreckt, wobei die Endbereiche jeweils Schmiermittelöffnungen (320, 326) haben, die sich an jeweiligen beabstandeten Abschnitten in den Durchgang öffnen, so daß Schmiermittel, das in eine Schmiermittelöffnung eintritt, im wesentlichen die gesamte Länge des Schmiermitteldurchgangs durchlaufen muß, bevor es durch die zweite Schmiermittelöffnung austritt.

2. Universalgelenk nach Anspruch 1, zudem umfassend:
einen zweiten Ring (315, Fig. 7);
ein zweites Joch (311), das mit der zweiten Welle verbunden und innerhalb des zweiten Rings angeordnet ist;
eine dritte Lagervorrichtung (322, 332), die das zweite Joch und den zweiten Ring schwenkbar verbindet;
eine dritte Welle; und
vierte Lagervorrichtungen (321, 332), die die dritte Welle und den zweiten Ring schwenkbar verbinden, wobei ein zweiter, nicht durchgehender Schmiermitteldurchgang (319) in Fluidkontakt mit der dritten und vierten Lagervorrichtung vorhanden ist, der zwei Endbereiche hat, die jeweils mit Schmiermittelöffnungen (320, 326) verbunden sind, so daß Schmiermittel, das in eine dieser Schmiermittelöffnungen eintritt, im wesentlichen die gesamte Länge des zweiten Schmiermitteldurchgangs durchlaufen muß, bevor es durch die andere Schmiermittelöffnung austritt, und der zweite Ring die dritte und die vierte Lagervorrichtung bildet, und der zweite Schmiermitteldurchgang durch einen einzelnen Kanal bereitgestellt wird, der sich im zweiten Ring befindet und sich um diesen herum um weniger als 360 Grad erstreckt.

3. Universalgelenk nach Anspruch 2, zudem umfassend eine dritte Stiftvorrichtung (322), die das zweite Joch und den zweiten Ring schwenkbar verbindet, und eine vierte Stiftvorrichtung, die die zweite Welle und den zweiten Ring verbindet, wobei die dritte und die vierte Lagervorrichtung jeweils die dritte und vierte Stiftvorrichtung aufnehmen.

4. Universalgelenk nach irgendeinem der vorhergehenden Ansprüche, wobei die Lagervorrichtungen Löcher (334) enthalten, durch die Schmiermittel fließen muß, wenn es sich von der ersten Öffnung zur zweiten Öffnung bewegt.

5. Universalgelenk nach irgendeinem der vorhergehenden Ansprüche, wobei der oder jeder Ring ein inneres Ringglied (317) und ein äußeres Ringglied (318) umfaßt.

6. Universalgelenk nach Anspruch 5, wobei das innere Ringglied so bemessen ist, daß es in das äußere Ringglied paßt.

7. Universalgelenk nach Anspruch 5 oder 6, wobei die Lagervorrichtungen Laufringe umfassen, die Lager enthalten und sich über das innere Ringglied und das äußere Ringglied erstrecken und mithelfen, den Ring zusammenzuhalten, indem sie eine Bewegung des inneren Ringglieds bezüglich des äußeren Ringglieds verhindern.

8. Universalgelenk nach irgendeinem der vorhergehenden Ansprüche, zudem umfassend eine Vorrichtung, die es der zweiten Welle erlaubt, sich bis zu 45 Grad relativ zur ersten Welle zu bewegen.

9. Universalgelenk nach Anspruch 8 wenn abhängig von Anspruch 2, wobei sich die zweite Welle bis zu 90 Grad relativ zur dritten Welle bewegen kann.

10. Universalgelenk nach irgendeinem der vorhergehenden Ansprüche, wobei das oder jedes Joch und der oder jeder Ring aus Komponenten hergestellt sind, die Längsachsen haben, und die jeweils kreissymmetrisch zu ihren Längsachsen sind.

11. Universalgelenk nach Anspruch 1 oder 3 oder irgendeinem der Ansprüche 2 und 4 bis 10 wenn abhängig von Anspruch 1 oder 3, wobei in dem oder in jedem Joch (311) Kerben (316) angeordnet sind, damit sich die Stiftvorrichtungen (321), die mit der Welle oder den Wellen verbunden sind, relativ zum Joch bewegen können.

## Revendications

1. Joint de cardan universel comprenant une bague (315) contenant un passage pour lubrifiant (319) muni d'orifices pour lubrifiant (320,326), un premier et un deuxième arbre (313 ou 513), une chappe (311) reliée au deuxième arbre et placée à l'intérieur de la bague, un premier moyen formant broche (322) reliant en vue de leur pivotement la chappe et la bague, un autre moyen formant broche (321) reliant en vue de leur pivotement le premier arbre et la bague, et une pluralité de moyens formant roulements (321, 332), dans la bague en contact par fluide avec le passage pour lubrifiant et recevant le premier et l'autre moyen formant broches, caractérisé en ce que le passage pour lubrifiant est un canal unique qui est situé dans la bague et s'étend à moins de 360 degrés autour de la bague entre deux régions formant extrémités du passage, les régions formant extrémités étant munies d'orifices (320, 326)pour lubrifiant respectifs qui débouchent dans le passage au niveau de parties respectives espacées, de telle sorte que le lubrifiant pénétrant dans un orifice pour lubrifiant doit s'écouler sur sensiblement toute la longueur du passage pour lubrifiant avant de ressortir par le deuxième orifice pour lubrifiant.

2. Joint de cardan universel selon la revendication 1 et comprenant:
une deuxième bague (315, figure 7);
une deuxième chappe (311) reliée au deuxième arbre et placée à l'intérieur de la deuxième bague;
un troisième moyen formant roulements (322, 332), reliant en vue de leur pivotement la deuxième chappe et la deuxième bague;
un troisième arbre; et
un quatrième moyen formant roulements (321, 332) reliant en vue de leur pivotement le troisième arbre et la deuxième bague, un deuxième passage pour lubrifiant non continu (319) étant prévu en contact par fluide avec les troisième et quatrième moyens formant roulements et possédant deux régions formant extrémités qui communiquent avec les orifices (320, 326) pour lubrifiant respectifs, de telle sorte que le lubrifiant pénétrant par un desdits orifices pour lubrifiant doit s'écouler sensiblement sur toute la longueur du deuxième passage pour lubrifiant avant de ressortir par l'autre orifice pour lubrifiant, les troisième et quatrième moyens formant roulements étant la deuxième bague et le deuxième passage pour lubrifiant étant formé par un canal unique qui est situé dans la deuxième bague et s'étend à moins de 360° autour de cette dernière.

3. Joint de cardan universel selon la revendication 2, et comprenant un troisième moyen formant broche (322) reliant en vue de leur pivotement la deuxième chappe et la deuxième bague et un quatrième moyen formant broche reliant en vue de leur pivotement le deuxième arbre et la deuxième bague, les troisième et quatrième moyens formant roulements recevant respectivement les troisième et quatrième moyens formant broches.

4. Joint de cardan universel selon l'une quelconque des revendications précédentes, dans lequel le moyen formant roulements comprend des trous (334) à travers lesquels le lubrifiant doit s'écouler lorsqu'il se déplace du premier orifice au deuxième orifice.

5. Joint de cardan universel selon l'une quelconque des revendications précédentes, dans lequel la ou chaque bague comprend un élément formant bague interne (317) et un élément formant bague externe (318).

6. Joint de cardan universel selon la revendication 5, dans lequel l'élément formant bague interne est dimensionné de manière à s'adapter à l'élément formant bague externe.

7. Joint de cardan universel selon la revendication 5 ou 6, dans lequel le moyen formant roulements comprend des chemins de roulement qui contiennent des roulements et qui s'étendent à travers l'élément formant bague interne et l'élément formant bague externe et permet de maintenir les bagues ensemble en évitant tout déplacement de l'élément formant bague interne par rapport à l'élément formant bague externe.

8. Joint de cardan universel selon l'une quelconque des revendications précédentes et comprenant un moyen pour permettre au deuxième arbre de se déplacer jusqu'à 45° par rapport au premier arbre;

9. Joint de cardan universel selon la revendication 8, lorsque jointe à la revendication 2, dans lequel le deuxième arbre peut se déplacer jusqu'à 90° par rapport au troisième arbre;

10. Joint de cardan universel selon l'une quelconque des revendications précédentes, dans lequel la ou chaque chappe et la ou chaque bague sont constituées de composants qui sont munis d'axes longitudinaux et sont circulairement symétriques autour de leurs axes longitudinaux.

11. Joint de cardan universel selon la revendication 1 ou 3, ou l'une quelconque des revendications 2 et 4 à 10, lorsque jointes à la revendication 1 ou 3, dans lequel la ou chaque chappe (311) possède à l'intérieur des encoches (316) pour permettre aux moyens formant broches (321) couplées à ou aux arbre(s) de se déplacer par rapport à la chappe.
